# EUROPEAN PATENT APPLICATION

(11) **EP 1 892 684 A1**
(43) Date of publication of application: **27.02.2008**
(21) Application number: 06834956.2
(22) Date of filing: 19.12.2006
(51) Int. Cl.: G07G 1/00

(54) **COMMODITY SALE DATA PROCESSING DEVICE**

(30) Priority: 19.12.2005 JP 2005365147
(71) Applicant: Toshiba TEC Kabushiki Kaisha, Tokyo 141-8664 (JP)
(72) Inventor: ENDO, Nobuhiro, c/oI.P.D. Toshiba Tec Kabushiki Kaisha, Tokyo 141-8664 (JP); ISHII, Jyun, c/oI.P.D. Toshiba Tec Kabushiki Kaisha, Tokyo 141-9664 (JP); UEMATSU, Tsuguharu, c/oI.P.D. Toshiba Tec Kabushiki Kaisha, Tokyo 141-8664 (JP); IIDA, Yuji c/oI.P.D. Toshiba Tec Kabushiki Kaisha, Tokyo 141-8664 (JP)
(74) Representative: Kramer - Barske - Schmidtchen
(86) International application number: PCT/JP2006/325246
(87) International publication number: WO 2007/072809

(57) **Abstract**

An article sales data processing apparatus (1) has an electronic tag data memory (42), and an article item buffer (41). A CPU (11) judges whether the same data as the electronic tag data read by the electronic tag reader (2) is stored in the electronic tag data memory (42). If the same data is already stored, the CPU discards the electronic tag data read from an electronic tag. If the same data is not stored, the CPU adds the electronic tag data read from an electronic tag to the electronic tag data memory (42). Based on this electronic tag data, the CPU obtains article sales data, and adds the data to the article item buffer (41). When registration/closing of one transaction is declared, the CPU executes closing of one transaction based on the article sales data in the article item buffer (41). After the closing is completed, the CPU clears the article item buffer (41).

## Description

### Technical Field

The present invention relates to an article sales data processing apparatus, which obtains data necessary for sales of article by making wireless data communication with every article of every sales unit.

### Background Art

In recent years in the distribution industry, a checkout system using an electronic tag has been developed. Article checked out by this system is given an electronic tag. A memory of an electronic tag stores an article code to specify article to which an electronic tag is given. Data stored in an electronic tag memory is processed by an article sales data processing apparatus, such as a POS (Point Of Sales) terminal, for example. An article sales data processing apparatus is provided with an electronic tag reader. An electronic tag reader reads data stored in an electronic tag memory. Wireless data communication is made between an electronic tag reader and an electronic tag. An antenna of an electronic tag reader is provided near a checkout counter.

When a customer places article on a checkout counter, an electronic tag given to the article is read by an electronic tag reader. The read electronic tag data is sent to an article sales data processing apparatus. Based on the received electronic tag data, an article sales data processing apparatus counts the sales data on the article given to that electronic tag as sales.

In such an article sales data processing apparatus, it is necessary to prevent double reading of the data of an electronic tag given to the same article. Jpn. Pat. Appln. KOKAI Publication No. 3373860 describes an article sales data processing apparatus, which is provided with a memory area to store an article code and serial number obtained from electronic tag data in a pair, and prevents double reading of electronic tag data.

In the above article sales data processing apparatus, a control unit is provided to judge whether an article code and serial number included in electronic tag data are stored in the memory area, whenever receiving electronic tag data from the electronic tag reader. When both the article code and serial number are already stored in the memory area, they are the data of an electronic tag already read, and they are discarded. If one of them is different, they are the electronic tag data given to new article, and the article code and serial number included in that data are added to the memory area.

An article code added to the memory is used to specify sales data on article to be counted as sales. Data stored in the memory area becomes unnecessary after that article data is counted as sales. Therefore, the memory area is cleared after one transaction is completed, in order to prepare for the next transaction. However, when article already paid for is still given an electronic tag having the same data as that given to article not yet paid, it is necessary to hold the data of the memory area until the article given to that effective state tag is separated a predetermined distance from the electronic tag reader. This prevents the other paid article from being registered again by mistake.

### Disclosure of Invention

In a conventional article sales data processing apparatus of this kind, customers cannot check out their own article until article already paid for is separated a predetermined distance from an electronic tag reader. Further, a particular technical means is necessary to judge whether or not article already paid for is separated a predetermined distance from an electronic tag reader.

It is an object of the present invention to provide an apparatus, which enables customers to check out smoothly before article already paid for is separated a predetermined distance from an electronic tag reader.

According to an aspect of the present invention, there is provided an article sales data processing apparatus provided with an electronic tag data memory for sequentially storing electronic tag data, and an article item buffer for sequentially storing article sales data. The article sales data processing apparatus reads electronic tag data from an electronic tag by an electronic tag reader, and judges whether the same data as the read electronic tag data is stored in the electronic tag data memory. If the same data is not stored, the electronic tag data read from the electronic tag is added to the electronic tag data memory. If the same data is already stored, the electronic tag data is not added to the electronic tag data memory. The article sale data processing apparatus obtains article sales data based on the electronic tag data added to the electronic tag data memory, and adds that sales data to an article item buffer. When closing of one transaction is declared, closing of that one transaction is performed based on the article sales data stored in the article item buffer. Subsequent to the closing operation, the article item buffer is cleared.

### Brief Description of Drawings

FIG. 1 is a block diagram showing a system configuration of one embodiment of the invention;
FIG. 2 is a block diagram showing main components of a POS terminal in the same embodiment;
FIG. 3 is a table showing the area structure of an article item buffer formed in the RAM of the same POS terminal;
FIG. 4 is a table showing the area structure of an electronic tag data memory formed in the RAM of the same POS terminal; and
FIG. 5 is a flowchart showing main steps of control process executed by the CPU of the same POS terminal.

### Best Mode for Carrying Out the Invention

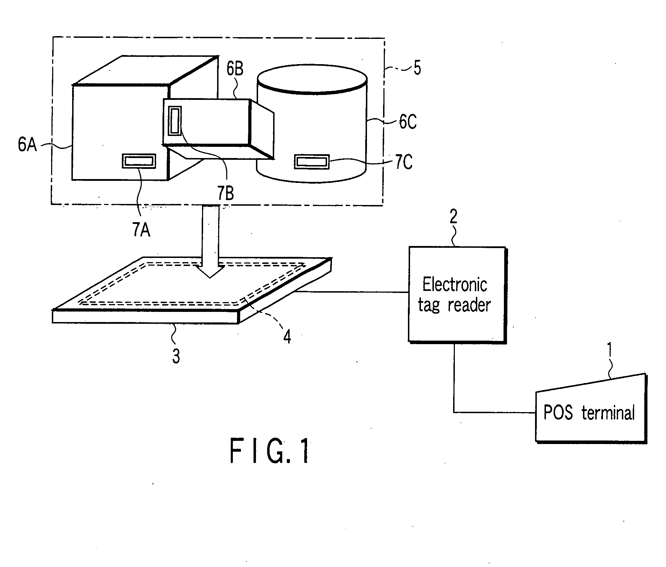

FIG. 1 shows an embodiment of an article sales data processing apparatus according to the present invention. This apparatus is provided with a POS (Point Of Sales) terminal 1, an electronic tag reader 2, and a tag antenna plate 3. The tag antenna plate 3 is provided with an antenna 4 to transmit/receive an electromagnetic field or radio wave to/from an electronic tag.

The electronic tag reader 2 makes noncontact communication with an electronic tag existing within a communication area of the antenna 4, and reads electronic tag data stored in a memory of that electronic tag. The electronic tag reader 2 has a collision avoidance function called an anti-collision system. Owing to this function, when article 6A, 6B and 6C for example are placed on the tag antenna plate 3, data of electronic tags 7A, 7B and 7C given to these article 6A, 6B and 6C is collectively read by the electronic tag reader 2. The article 6A, 6B and 6C may be in a housing 5 like a shopping basket:

The electronic tag data read by the electronic tag reader 2 is sequentially transmitted to the POS terminal 1. The POS terminal 1 counts the sales data on the article 6A, 6B and 6C as sales, based on the received electronic tag data.

The electronic tags 7A, 7B and 7C are also called a radio tag, RFID (Radio Frequency Identification) or an IC tag. In this embodiment, the electronic tags 7A, 7B and 7C given to the article 6A, 6B and 6C are called an article tag. A memory of article tag stores at least an ID code peculiar to a tag, such as a serial number set upon manufacturing of a tag, and an article code to specify article given an article tag.

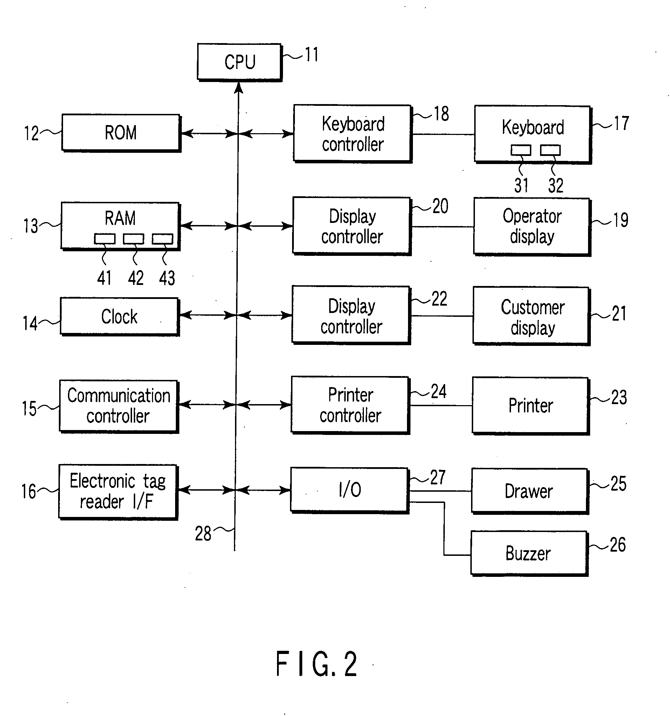

FIG. 2 is a block diagram showing the main components of the POS terminal 1 as an embodiment of an article sales data processing apparatus. The POS terminal 1 has a CPU (Central Processing Unit) as a main control unit. The POS terminal is also provided with a ROM (Read Only Memory) 12, a RAM (Random Access Memory) 13, a clock 14, a communication controller 15, an interface 16 of an electronic tag reader 2, a controller 18 of a keyboard 17, a controller 20 of a operator display 19, a controller 22 of a customer display 21, a controller 24 of a printer 23, and an I/O (Input/Output) port 27 to output a signal to a drawer 25 and a buzzer 26.

The CPU 11 connects the ROM 12, RAM 13, clock 14, communication controller 15, electronic tag reader interface 16, I/O port 27 and controllers 18, 20, 22 and 24 for input/output units, through a bus line 28 such as an address bus and data bus.

The ROM 12 previously stores fixed data such as a program. The RAM 13 includes memory areas for storing variable data, such as input data and arithmetic operations. The clock 14 indicates the current time. The communication controller 15 is connected online to a store server.

The keyboard 17 is provided with at least a close key 31 and a re-read key 32. The close key 31 is operated to declare completion of one transaction. The close key 31 functions as a closing declaration means. The re-read key 32 is operated to re-read data of electronic tags given to all article to be sold in one transaction. The re-read key 32 functions as a clearing instruction means.

The RAM 13 is provided with at least an article item buffer 41, an electronic tag data memory 42, and a work buffer 43. The article item buffer 41 sequentially stores article sales data. The electronic tag data memory 42 sequentially stores electronic tag data. The work buffer 43 temporarily stores electronic tag data read by the electronic tag reader 2.

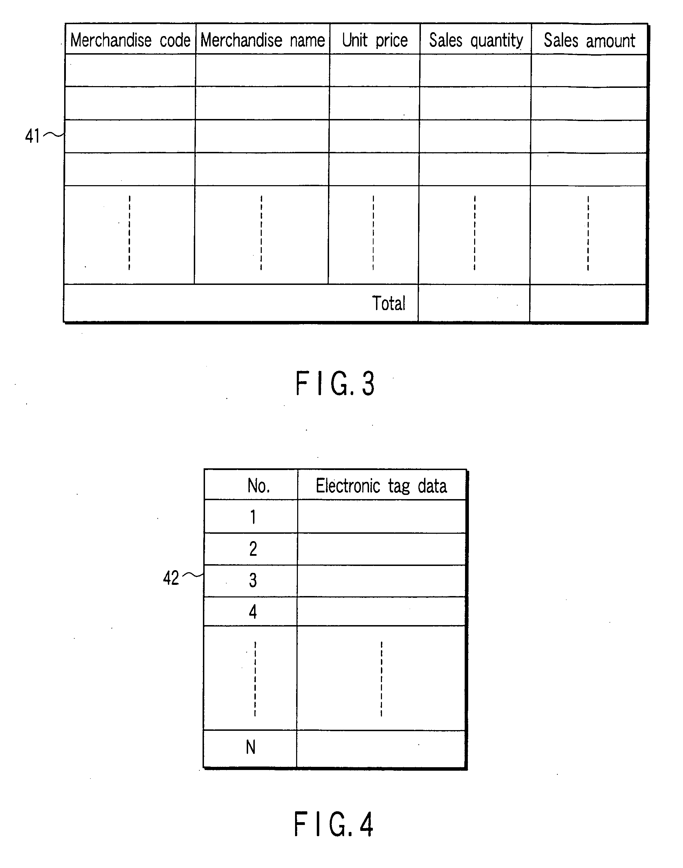

As shown in FIG. 3, the article item buffer 41 has an area for storing article sales data consisting of an article code, an article name, a unit price, sales quantity and sales amount, and an area for storing total sales quantity and sales amount. When the close key 31 is operated, data stored in the article item buffer 41 is regarded as belonging to one transaction, and collectively processed.

As shown in FIG. 4, the electronic tag data memory 42 has an area for storing electronic tag data corresponding to a certain number N (N>1) of area numbers. The electronic tag data memory 42 stores electronic tag data sequentially from an area No. 1. When electronic tag data is stored in up to an area number N, subsequent data is sequentially overwritten from the area No. 1.

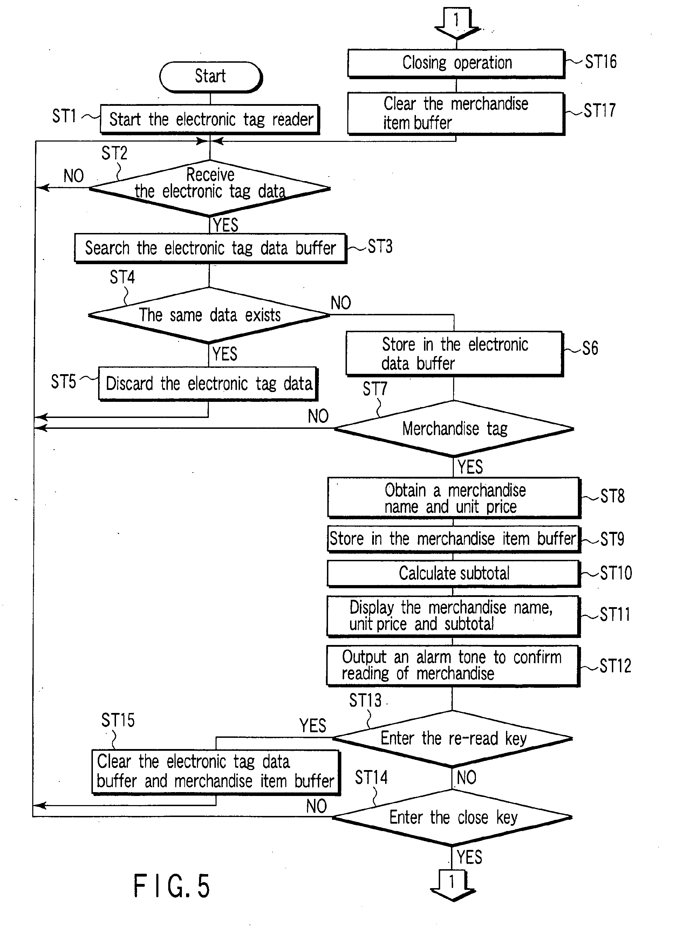

In the POS terminal 1 configured as described above, when the system is booted up by turning on power, the CPU 11 executes the control operation according to the flowchart shown in FIG. 5. Namely, as a step 1 (ST1), the CPU 11 instructs the electronic tag reader 2 connected through the electronic tag reader interface 16 to start operation.

Receiving the start instruction, the electronic tag reader 2 modulates a reading signal to read an electronic tag, continuously transmits the modulated wave from the antenna 4, and waits until the antenna 4 receives a response wave from an electronic tag. When receiving a response wave, the electronic tag reader demodulates the received wave, and transmits a reply data, that is, the electronic tag data stored in the memory of that electronic tag, to the POS terminal 1.

As a step 2 (ST2), the CPU 11 waits for reception of the electronic tag data. Receiving the electronic tag data from the electronic tag reader 2, the CPU 11 overwrites this electronic tag data in the work buffer 43, as a step 3 (ST3). Then, the CPU searches the electronic tag data memory 42 by the ID code peculiar to the tag included in the electronic tag data in the work buffer 43.

If the same ID code is stored in the electronic tag data memory 42, the CPU 11 judges that the same data as the received electronic tag data is already stored in the electronic tag data memory 42, as a step 4 (ST4). In this case, the CPU 11 discards that electronic tag data stored in the work buffer 43, without adding to the electronic tag data memory 42, as a step 5 (ST5). Thereafter, the CPU 11 returns to the step ST2, and waits for reception of next electronic tag data.

Contrarily, if the same ID code is not stored in the electronic tag data memory 42, the CPU 11 judges that the same data as the received electronic tag data is not yet stored in the electronic tag data memory 42, as a step 4 (ST4). In this case, the CPU 11 adds that electronic tag data stored in the work buffer 43 to the electronic tag data memory 42.

Then, the CPU 11 judges whether that the electronic tag data added to the electronic tag data memory 42, that is, the electronic tag data in the work buffer 43 is the' data of the article tag given to each article, as a step 7 (ST7). If that data is not the data of an article tag, the CPU 11 returns to the step ST2, and waits for reception of next electronic tag data.

If the electronic tag data in the work buffer 43 is the data including an article code in addition to an ID code, this electronic tag data is the data of an article tag. In this case, as a step 8 (ST8), the CPU 11 obtains article data, such as an article name and unit price, based on the article code included in that electronic tag data.

The POS terminal 1 is provided with an article data file, in which article data such as an article name and unit price is preset corresponding to an article code of each article. The CPU 11 obtains an article code from electronic tag data, searches the article data file by that article code, and obtains article data such as article name and unit price previously set corresponding to that article code. It is possible to omit the article data file by storing article data such as an article name and unit price, in addition to an article code in the memory of an article tag.

Obtaining article data, such as an article code, article name and unit price, the CPU 11 generates article sales data consisting of an article code, an article name, a unit price, sales quantity and sales mount, as a step 9 (ST9). The sales quantity is assumed as "1" in this article sales data. Therefore, the unit price is counted as a sales price as it is. The CPU 11 adds the article sales data to the article item buffer 41.

As a step 10 (ST10), the CPU 11 adds the sales quantity and sales amount of each article sales data stored in the article item buffer 41. The CPU 11 calculates the total of sales quantity and sales amount, and rewrites the total area of the article item buffer 41.

As a step 11 (ST11), the CPU 11 displays an article name, unit price and total amount in the operator display 19 and customer display 21. As a step 12 (ST12), the CPU 11 sends a drive signal to the buzzer 26 to emit an alarm tone to confirm reading of article.

As a step 13 (ST13), the CPU 11 judges whether the re-read key 32 is operated. If the re-read key 32 is not operated, the CPU 11 judges whether the close key 31 is operated, as a step 14 (ST14). If the close key 31 is not operated, the CPU returns to the step 2 (ST2), and waits for reception of next electronic tag data.

If the re-read key is 32 is operated, the CPU 11 clears the electronic tag data memory 42 and article item buffer 41. Then, the CPU 11 returns to the step 2 (ST2), and waits for reception of next electronic tag data.

If the close key 31 is operated, the CPU 11 closes one transaction based on the article sales data stored in the article item buffer 41, as a step 16 (ST16). This closing operation includes calculation of change for payment to total amount of transaction, display of the change in the operator display 19 and customer display 21, and opening of the drawer 25. The closing operation also includes driving the printer, and issuing a receipt printing the detailed transaction data, such as an article name, a sales quantity, sales amount, total number, and total amount stored in the article item buffer 41.

After the closing operation is completed, the CPU 11 clears the article item buffer 41, as a step 17 (ST17). In this time, the electronic tag data memory 42 is not cleared. The CPU 11 returns to the step 2 (ST2), and waits for reception of next electronic tag data.

As described above, in this embodiment, when the POS terminal 1 is turned on, the antenna 4 of the electronic tag reader 2 continuously emits a wave for reading an electronic tag. When an electronic tag comes into the communication area of the antenna 4, the electronic tag reader 2 reads the electronic tag data stored in the memory of this electronic tag in a noncontact manner, and transmits the read tag data to the POS terminal 1.

Let's assume that a customer comes to an accounting place provided with the POS terminal 1 in order to purchase three items of article 6A, 6B and 6C. In this case, a clerk in charge of counting, i.e., a cashier, puts the article 6A, 6B and 6C on the tag antenna plate 3. Then, the electronic tags 7A, 7B and 7C given to the article 6A, 6B and 6C emit a response wave of electronic tag data including an ID code and article code, in response to the reading wave from the antenna 4.

Let's assume that the antenna 4 receives a response wave from the electronic tag 7A given to the article 6A. The electronic tag reader reads the electronic tag data including the ID code and article code stored in the electronic tag 7A, and sends it to the POS terminal 1.

The POS terminal 1 judges whether the ID code of the received electronic tag data is stored in the electronic tag data memory 42. In this case, as the ID code is not stored in the memory 42, this electronic tag data is added to the electronic tag data memory 42. Based on the article code included in the electronic tag data, the article name and unit price of that article A are obtained, and article sales data is created. This article sales data is stored in the article item buffer 41. The article item buffer 41 has been cleared after the transaction of the previous customer is closed.

Let's assume that the antenna 4 receives a response wave from the electronic tag 7B given to the article 6B. The electronic tag reader reads the electronic tag data including the ID code and article code stored in this electronic tag 7B, and sends it to the POS terminal 1.

The POS terminal 1 judges whether the ID code of the received electronic tag data is stored in the electronic tag data memory 42. In this case, also, the ID code is not stored in the memory 42, and this electronic tag data is added to the electronic tag data memory 42. Based on the article code included in the electronic tag data, the article name and unit price of that article B are obtained, and article sales data is created. This article sales data is stored in the article item buffer 41.

The same operation as the above will be taken when the antenna 4 receives a response wave from the electronic tag 7C given to the article 6C.

Assuming that the antenna 4 receives again the response wave from the electronic tag 7B before receiving the response wave from the electronic tag 7C, for example, as the ID code stored in the electronic tag 7B is already stored in the electrode tag data memory 42, the electronic tag data of this electronic tag 7B is discarded.

Thereafter, when a cashier operates the close key 31, the closing operation is performed based on the sales data of article 6A, 6B and 6C stored in the article item buffer 41. After the closing operation, the article item buffer 41 is cleared. Therefore, accounting of the next customer becomes possible.

' In this time, the electronic tag data memory 42 is not cleared. The electronic tag data of the electronic tags 7A, 7B and 7C given to the article 6A, 6B and 6C are still stored in the electronic tag data memory 42. Therefore, even if an article purchased and paid for by the previous customer exists near the electronic tag reader 2 and the data of the electronic tag given to this purchased article is read again, that electronic tag data is not added to the electronic tag data memory 42. The sales data of the article 6A, 6B and 6C given to the electronic tag 7A, 7B and 7C, whose data is stored and held in the electronic tag data memory 42, is of course not stored in the article item buffer 41.

Namely, re-registration of article purchased and paid for by a previous customer is prohibited by a double-reading prevention function utilizing the data of the electronic tag data memory 42. Therefore, accounting of the next customer can be smoothly executed. Further, a particular technical means for checking whether paid for article is separated a predetermined distance from the electronic tag reader is not required. Therefore, the system can be realized at low cost.

In this embodiment, the re-read key 32 is provided in the keyboard 17. When this re-read key 32 is operated, the electronic tag data memory 42 is cleared together with the article item buffer 41. The re-read key 32 is used when a customer offers to cancel the purchase of a part of article before a cashier operates the close key 31.

For example, when a customer offers to cancel the purchase of the article 6C after the sales data of article 6A, 6B and 6C is stored in the item buffer 41, a casher removes the article 6C from the tag antenna plate 3, and operates the re-read key 32. Then, both article item buffer 41 and electronic tag data memory 42 will be cleared.

In this time, the article 6A and 6B are left on the tag antenna plate 3. The electronic tag reader 2 reads the electronic tag data of the electronic tags 7A and 7B given to the article 6A and 6B. The electronic tag data of both electronic tags 7A and 7B is already cleared from the electronic tag data memory 42. Therefore, the electronic tag data of the electronic tags 7A and 7B is newly added to the electronic tag data memory 42. Based on the added electronic tag data, the sales data of the article 6A and 6B is stored in the article item buffer 42. Thereafter, when the close key 31 is operated, the closing operation is executed based on each sales data of the article 6A and 6B stored in the article item buffer 41.

In this embodiment, when canceling the sales of article given an electronic tag whose data has been read, the article to be cancelled is simply removed from the tag antenna plate 3, and re-read key 32 is operated.

In an existing article sales data processing apparatus which inputs an article code one by one by reading a barcode, when stopping the sales of article entered last time and canceling the entry, the last cancel key is simply operated. However, when stopping the sales of article other than the last entered one and canceling the entry, it is necessary to operate a specific cancel key and enter a barcode specifying the article to be cancelled. This is troublesome. In this embodiment, only the above-mentioned simple operation is necessary. The operation is simple, efficient, easy-to-master, and advantageous for an inexperienced cashier, such as a part-timer, to operate the apparatus error-free.

In the above embodiment, the electronic tag data memory 42 is searched by an ID code peculiar to an electronic tag data received, and the existence of electronic tag data including the same ID code is detected. In the operation mode that an electronic tag read by the electronic tag reader 2 is limited to an article tag, the electronic tag data memory 42 may be searched by the ID code and article code included in the received electronic tag data, and the existence of electronic tag data including the same ID code may be detected.

### Industrial Applicability

The invention is used for a system in which an electronic tag is given to article and article purchased by a customer is checked out based on the data stored in the electronic tag.

## Claims

1. An article sales data processing apparatus having an electronic tag reader for reading data stored in an electronic tag, and processing sales data of article given an electronic tag based on electronic tag data read from the electronic tag read by the electronic tag reader, **characterized by** comprising:
an electronic tag data memory for sequentially storing electronic tag data;
an article item buffer for sequentially storing article sales data;
a data existence judging means for judging whether the same data as the electronic tag data read from the electronic tag by the electronic tag reader is stored in the electronic tag data memory;
an electronic tag data processing means for adding the electronic tag data read from the electronic tag to the electronic tag data memory when the data existence judging means judges that the same data is not stored, and not adding the electronic tag data read from the electronic tag to the electronic tag data memory when the same data is already stored;
an article sales data adding means for obtaining article sales data based on the electronic tag data added to the electronic tag data memory by the electronic tag data processing means, and adding the data to the article item buffer;
a closing declaration means for declaring closing of one transaction;
a closing operation means for executing closing of one transaction based on the article sales data stored in the article item buffer, when the closing declaration means declares closing of one transaction; and
an article item buffer clearing means for clearing the article item buffer, subsequent to the transaction closing operation executed by the closing operation means.

2. The article sales data processing apparatus according to claim 1, **characterized by** further comprising a clearing instruction means for instructing clearing of the electronic tag data memory, and a buffer clearing means for clearing both electronic tag data memory and article item buffer on condition that clearing is instructed by the clearing instruction means.

3. The article sales data processing apparatus according to claim 2, **characterized in that** the clearing instruction means is a re-read key to instruct re-reading data of an electronic tag given to all article to be sold as one transaction.
